# FASCICULE DE BREVET EUROPEEN

(11) **EP 2 909 154 B1**
(45) Date de publication et mention de la délivrance du brevet: **11.03.2020**
(21) Numéro de dépôt: 13803093.7
(22) Date de dépôt: 10.10.2013
(51) Int. Cl.: C05F 7/00, C05D 9/00, C05F 3/00, C05F 17/00

(54) **PROCEDE DE TRAITEMENT DES DIGESTATS, ENGRAIS OBTENU PAR CE PROCEDE ET UNITE DE TRAITEMENT CORRESPONDANTE**
GÄRREST-BEHANDLUNGSVERFAHREN, AUS DIESEM VERFAHREN GEWONNENES DÜNGEMITTEL UND ENTSPRECHENDE BEHANDLUNGSEINHEIT
DIGESTATE TREATMENT METHOD, FERTILIZER RESULTING FROM SAID METHOD, AND CORRESPONDING TREATMENT UNIT

(30) Priorité: 18.10.2012 FR 1259931
(43) Date de publication de la demande: 26.08.2015
(73) Titulaire: Melspring, 22210 Saint Etienne du Gue de L'Isle (FR); Centre National de la Recherche Scientifique, 75794 Paris Cedex 16 (FR); Université de Haute Alsace, 68093 Mulhouse (FR)
(72) Inventeur: BALUSSON, Hervé, F-56580 Brehan (FR); BALUSSON, Sébastien, F-22210 Saint Etienne du Gue de L'Isle (FR); PATARIN, Joêl, F-68720 Flaxlanden (FR); BRENDLE, Jocelyne, F-68270 Wittenheim (FR); LEBEAU, Bénédicte, F-68700 Wattwiller (FR)
(74) Mandataire: Ermeneux, Bertrand
(86) Numéro de dépôt international: PCT/FR2013/052425
(87) Numéro de publication internationale: WO 2014/060687

(56) Documents cités:
- EP-A1- 0 287 881
- EP-A1- 0 544 228
- WO-A1-92/12944
- WO-A1-94/02418
- WO-A2-2004/049787
- DE-A1-102008 062 299

## Description

### 1. Domaine de l'invention

Le domaine de l'invention est celui du traitement et de la valorisation des résidus issus du processus de méthanisation. Un domaine connexe à l'invention est celui de la fabrication des engrais.

Plus précisément, l'invention concerne un procédé et une unité de traitement des digestats extraits d'un digesteur d'une installation de méthanisation.

### 2. Etat de la technique

La méthanisation est actuellement une technologie en plein essor en Europe. On a ainsi dénombré en 2011 quarante six unités de méthanisation en construction en France et plusieurs centaines en Allemagne.

Ces unités de méthanisation permettent de produire du biogaz à partir de la fermentation anaérobie de déchets agricoles, industriels ou de collectivités de nature organique, tels que par exemple des effluents d'élevage, des déjections animales, des déchets organiques d'une industrie agroalimentaire, des boues de station d'épuration ou une fraction fermentescible des ordures ménagères, qui peut ensuite être utilisé pour chauffer des bâtiments, pour alimenter une installation de cogénération dans le but de produire de l'électricité ou sous forme de biocarburant.

Le processus de méthanisation permet ainsi de valoriser la matière carbonée contenue dans ces déchets.

Cependant, la plupart des déchets organiques contient également de l'azote sous forme organique qui va pour l'essentiel être transformé sous une forme minérale ou gazeuse lors du processus de méthanisation, et par exemple en azote ammoniacal sous forme ionisée (ion ammonium) ou en ammoniac.

À l'issue du processus de méthanisation, on retrouve donc de fortes concentrations d'azote sous forme ammoniacale dans les digestats, notamment dans la fraction liquide des digestats.

Le déstockage des digestats s'avère toutefois problématique. La solution la plus simple et la plus économique consisterait en effet à épandre les digestats sur des terres agricoles. Cependant, l'épandage des digestats sur des terres agricoles se révèle être une solution polluante qui modifie les écosystèmes terrestres, entraîne une eutrophisation des milieux aquatiques et participe à la pollution atmosphérique du fait qu'elle favorise la volatilisation des dérivés azotés sous forme de gaz ammoniac. Pour cette raison, l'épandage des digestats en l'état est contrôlé et soumis à un plan d'épandage, ce qui limite fortement les quantités de digestats pouvant être éliminées par cette voie.

On a donc cherché à appliquer un traitement aux digestats pour remédier à ce problème.

On connait une technique de compostage des digestats.

Un inconvénient de cette technique de compostage est qu'elle ne permet de traiter que la fraction solide des digestats, sans agir sur la fraction liquide des digestats qui est la plus concentrée en azote sous forme ammoniacale.

Il est également connu d'utiliser une technique de traitement biologique par nitrification-dénitrification au sein de bassins contenant des boues activées.

Un inconvénient de cette technique de traitement biologique est qu'elle consomme de l'électricité pour procéder à l'aération du réacteur.

Cette technique présente également l'inconvénient de transformer l'azote sous forme ammoniacale en nitrates, qui sont lessivés dans le sol par les eaux de pluie et contribuent ainsi à la pollution des nappes phréatiques ou des cours d'eau et favorisent la prolifération des espèces d'algues endémiques sur les côtes.

Encore un inconvénient de cette technique est qu'elle produit de façon résiduelle de l'ammoniac et du protoxyde d'azote.

On a également proposé de fixer l'azote sous forme ammoniacale sous sa forme soluble, en ajoutant de l'acide sulfurique à une fraction liquide des digestats concentrée en espèces ioniques, obtenue en utilisant une technique de filtration ultra-membranaire ou d'osmose inverse, ou par évaporation.

Cette technique présente de nombreux inconvénients : elle est couteuse à mettre en œuvre, notamment du fait de la quantité d'acide sulfurique consommée et de son stockage, et nécessite l'emploi de produits chimiques pour nettoyer les membranes de filtration ou d'osmose inverse ou encore de chauffer fortement les digestats pour évaporer l'eau résiduelle.
On connait également une technique dite de "strippage" consistant à pulvériser la fraction liquide du digestat sur un substrat dans une colonne à contre courant d'une circulation d'air chaud à 60-70°C ou de vapeur afin de favoriser la volatilisation des dérivés azotés en ammoniac. L'ammoniac sortant de la colonne est alors transformé en sulfate d'ammonium suite à un lavage à l'acide sulfurique, en nitrate d'ammonium après lavage à l'acide nitrique, condensé en eau ammoniacale, ou éliminé par nitrification-dénitrification biologique en phase gazeuse ou par combustion catalytique haute température.

Un inconvénient de cette technique de strippage est que le coût de revient et d'entretien des installations est élevé.

En outre, cette technique de strippage est très consommatrice en énergie et elle suppose d'utiliser des quantités importantes d'acides pour transformer l'ammoniac volatilisé.

Par ailleurs lorsque l'ammoniac est éliminé par nitrification-dénitrification ou par combustion catalytique, la teneur des digestats en composés azotés est fortement réduite, et les digestats traités ne présentent plus alors que peu d'intérêt pour la fertilisation des sols.

On a aussi pensé à co-précipiter les ions ammonium et le phosphate présent dans les digestats sous forme de struvite, ou en d'autres termes de magnésium-ammonium-phosphate.

Un inconvénient de cette technique de précipitation est qu'il est nécessaire d'utiliser des quantités importantes d'oxyde de magnésium, d'hydroxyde de sodium et d'acide phosphorique pour la mettre en œuvre, ce qui est couteux.

Un autre inconvénient est qu'il n'existe pas actuellement de marché pour un engrais aussi riche en phosphore qu'en azote. Des procédés de valorisation des lisiers sont connus des demandes EP 0 287 881 A1, WO 92/12944 A1 et WO 94/02418 A1.

La demande DE 10 2008 062299 A1 divulgue un procédé de valorisation de boues d'épuration avec une teneur élevée en azote.

### 3. Objectifs de l'invention

L'invention a donc notamment pour objectif de pallier les inconvénients de l'état de la technique cités ci-dessus.

Plus précisément l'invention a pour objectif de fournir une technique de traitement des digestats qui soit simple à mettre en oeuvre et d'un coût de revient réduit.

Un objectif de l'invention est également de fournir une telle technique de traitement des digestats qui permette de valoriser les digestats traités sous forme d'engrais.

Un autre objectif de l'invention est de fournir une telle technique de traitement qui soit efficace.

L'invention a également pour objectif de proposer une technique de traitement des digestats qui soit sans danger sur l'environnement.

Encore un objectif de l'invention est de fournir une telle technique de traitement des digestats qui soit fiable.

### 4. Exposé de l'invention

Ces objectifs, ainsi que d'autres qui apparaitront par la suite sont atteints à l'aide d'un procédé de traitement d'un digestat extrait d'un digesteur d'une installation de méthanisation.

L'invention propose donc de traiter les digestats à la sortie du digesteur afin de ne pas perturber l'action enzymatique, microbienne et/ou bactérienne au sein du digesteur. Par ailleurs, il n'est ainsi pas nécessaire de modifier la conception des digesteurs.

On note que le traitement proposé peut porter seulement sur la fraction liquide d'un digestat ou directement sur un digestat brut dans lequel une fraction liquide et une fraction solide sont présentes.

Selon l'invention, un tel procédé de traitement des digestats comprend:
- une étape de mélange d'au moins la fraction liquide dudit digestat avec une matière d'origine essentiellement minérale comprenant une quantité substantielle d'argile, de zéolithe et/ou de terre de diatomées, dans des proportions égales à 100 à 300 g de ladite matière d'origine essentiellement minérale par litre de ladite fraction liquide dudit digestat, pendant une durée d'au moins 1 heure, suffisante pour permettre un piégeage au moins partiel par ladite matière de l'azote ammoniacal sous forme ionisée, encore appelé ion ammonium de formule NH₄⁺, contenu dans ledit digestat ;
- une étape de séparation de la fraction solide dudit mélange;
- une étape de mélange de la fraction liquide dudit mélange obtenue après séparation avec une deuxième matière d'origine essentiellement minérale comprenant une quantité substantielle d'argile, de zéolithe et/ou de terre de diatomées, apte à piéger au moins une portion d'une espèce azotée résiduelle présente dans ladite fraction liquide dudit mélange après séparation.

Ainsi, de façon inédite, l'invention propose de fixer au moins une partie des ions ammonium et du potassium présents dans la fraction liquide ou la fraction solide du digestat par piégeage sur une matière essentiellement minérale mélangée avec le digestat ou seulement avec sa fraction liquide ou encore avec la fraction liquide du digestat et une partie de la fraction solide du digestat, afin d'éviter une transformation des ions ammonium sous forme d'ammoniac.

Dans le cadre de l'invention, le terme "piégeage" s'entend dans son acception générale et vise la retenue des ions ammonium dans la matière essentiellement minérale suite à un échange d'ions. Il peut par exemple s'agir d'un piégeage par adsorption.

Les ions ammonium ne subissant pas de transformation du fait du procédé objet de l'invention, ils contribuent à la valorisation de la matière minérale utilisée. Après traitement, la matière essentiellement minérale est ainsi enrichie en ions ammonium facilement assimilables par les plantes et peut être utilisée dans la composition d'un engrais.

Il convient de noter que, dans le cadre de l'invention, on entend par l'expression "d'origine essentiellement minérale" que la matière mélangée avec la fraction liquide du digestat, ou directement avec le digestat, est composée principalement de substances minérales d'une seule espèce, groupe ou famille minérale ou agencées en mélange.

Dans des modes de réalisation particuliers de l'invention, il peut être prévu que la matière d'origine essentiellement minérale contienne en moindre proportion des éléments organiques, et notamment des polysaccharides solubles dans l'eau provenant de macroalgues.

De façon préférentielle, la matière essentiellement minérale mise en œuvre pour traiter les digestats se présente sous forme d'une poudre ou d'un amas de granules, de sorte à accroitre la surface de contact entre cette matière et le digestat.

Dans un autre mode de réalisation particulier de l'invention, un tel procédé de traitement d'un digestat comprend une étape de séparation de la fraction liquide dudit digestat, préalable à ladite étape de mélange.

Cette étape de séparation peut notamment être mise en œuvre en appliquant des techniques de séparation connues en soi, telles que la filtration, la centrifugation ou le pressage à l'aide d'une presse à vis, par exemple. Elle permet de concentrer l'azote sous forme ammoniacale au sein de la fraction liquide du digestat.

L'étape de séparation influe peu en revanche sur la concentration en potassium qui demeure sensiblement égale dans la fraction solide et dans la fraction liquide du digestat après séparation de phase.

Selon un aspect particulier de l'invention, le procédé de traitement d'un digestat décrit ci-dessus comprend en outre une étape supplémentaire de mélange de ladite fraction solide du digestat avec ladite fraction solide dudit mélange.

Ceci permet ainsi de valoriser également l'azote organique résiduelle et le potassium contenu dans la fraction solide du digestat.

Dans un autre mode de réalisation particulier de l'invention, lors de ladite étape de mélange, ledit digestat est mélangé avec ladite matière d'origine essentiellement minérale.

En mélangeant ainsi directement le digestat avec la matière d'origine, on obtient un procédé de traitement particulièrement simple à mettre en œuvre et économique, ne nécessitant que deux étapes : une étape de mélange du digestat avec une matière d'origine essentiellement minérale suivie d'une étape de séparation de la phase solide du mélange.

Les inventeurs de la présente demande ont par ailleurs observé, de façon surprenante, que le taux de rétention des ions ammonium et potassium par la matière d'origine sensiblement minérale augmente d'au moins 10% lorsqu'on mélange directement le digestat avec cette dernière.

Cette hausse inattendue du taux de rétention pourrait s'expliquer par une meilleure capacité du digestat à interagir avec une matière d'origine sensiblement minérale par comparaison avec la seule fraction liquide du digestat.

Lors de ladite étape de mélange, on mélange de 100 à 300 g de ladite matière avec 1 litre de ladite fraction liquide dudit digestat, ou de 80 à 270 g de ladite matière avec 1 kilogramme de digestat, en proportions.

On limite ainsi la quantité de matière utilisée pour traiter les digestats. Par ailleurs en respectant des proportions de 100 à 300 g par litre de fraction liquide du digestat ou de 80 à 270g par kilogramme de digestat, la matière d'origine essentiellement minérale ne se sature pas prématurément en ions ammonium, quelle que soit la teneur en ions ammonium du digestat ou de sa fraction liquide.

La durée de ladite étape de mélange est au moins égale à 1 heure, et de préférence est supérieure ou égale à 7 heures.

Dans le cas où lors du traitement, le digestat ou sa fraction liquide sont mélangés successivement avec plusieurs matières d'origine sensiblement minérale, il peut être envisagé de réduire la durée de chaque étape successive de mélange entre 10 minutes et 4 heures.

Préférentiellement, un tel procédé de traitement comprend une étape d'ajustement du pH dudit mélange d'au moins ladite fraction liquide dudit digestat avec ladite matière d'origine essentiellement minérale entre 4,5 et 7, comprenant une étape d'ajout audit mélange d'un agent acidifiant, d'un agent basique ou d'une solution tampon.

On se place ainsi dans des conditions favorables à la substitution des cations de la matière sensiblement minérale par des ions ammonium ou potassium du digestat.

L'agent acidifiant peut par exemple être un acide tel que HCl, HNO₃, H₂SO₄, ou CH₃COOH, ou un sel acide tel que FeSO₄, NH₄HF₂, KHF₂, NaHSO₄, ou KHSO₄ ou un mélange d'un acide et d'un sel d'acide.

Dans au moins un mode de réalisation particulier de l'invention, il peut être envisagé que l'agent acidifiant comprenne du sulfate de fer obtenu à partir du traitement de l'ilménite.

Il peut être envisagé que l'agent basique soit une base, telle que NaHCO₃, Na₂CO₃, CH₃COONa, Na₂S, NaHS, un sel basique ou un mélange d'une base et d'un sel basique.

La solution tampon pouvant être incorporée au mélange pour amener son pH à une valeur prédéterminée peut être par exemple (CH₃COONa, CH₃COOH) ou (NH₄OH, NH₄Cl)

Dans un mode de réalisation avantageux de l'invention, le mélange est chauffé à une température comprise entre 30°C et 50°C lors de ladite étape de mélange.

Les inventeurs ont en effet constaté que chauffer le mélange à environ 40°C peut permette d'accélérer de façon sensible le piégeage des ions ammonium et potassium par la matière sensiblement minérale.

Le procédé de traitement d'un digestat décrit ci-dessus comprend une étape de mélange de la fraction liquide dudit mélange obtenue après séparation avec une deuxième matière d'origine essentiellement minérale comprenant une quantité substantielle d'argile, de zéolithe et/ou de terre de diatomées, apte à piéger au moins une portion d'une espèce azotée résiduelle présente dans ladite fraction liquide dudit mélange après séparation.

Cette deuxième étape de mélange permet notamment de réduire la durée totale du traitement.

Préférentiellement, un procédé de traitement d'un digestat tel que décrit ci-dessus comprend une pluralité d'étapes de mélange successives consistant à mélanger la fraction liquide obtenue après séparation du mélange précédent avec de la matière d'origine essentiellement minérale apte à piéger au moins une portion d'une espèce azotée résiduelle présente dans la fraction liquide du mélange précédent et comprenant une quantité substantielle d'argile, de zéolithe et/ou de terre de diatomées.

Il peut ainsi être prévu par exemple 3, 4, ou 5 étapes de mélange successives, de façon à retenir jusqu'à 95% des ions ammonium contenus dans le digestat. De cette façon il est possible rejeter dans la nature un effluent liquide présentant une teneur très faible en azote ammoniacal, après traitement.

Selon un mode de réalisation avantageux de l'invention, il peut être prévu de sélectionner la matière d'origine essentiellement minérale de chaque mélange successif de sorte que la capacité de rétention des ions ammonium et potassium de chaque mélange soit plus élevée que celle du mélange qui le précède dans la séquence de mélanges successifs.

Avantageusement, ladite matière comprend de la zéolithe naturelle, de préférence de la clinoptilolithe et/ou de la chabazite, ou toute autre zéolithe naturelle connue présentant une capacité d'échange cationique convenable.

Les inventeurs ont en effet observé qu'il s'opère une substitution particulièrement efficace des cations occlus dans la porosité d'une zéolithe naturelle par des ions ammonium ou potassium.

Selon un aspect avantageux de l'invention, ladite matière d'origine essentiellement minérale comprend de l'argile exfoliée et/ou intercalée avec un extrait d'algues et/ou des macroalgues.

Il peut notamment s'agir d'une argile exfoliée et/ou intercalée telle que décrite dans les demandes de brevet FR05/02388, PCT/FR2005/000145, ou FR 12/55653, qui sont ici incorporés par référence dans la présente demande.

Dans le cadre de l'invention, on entend par le terme "argile" un phyllosilicate d'origine naturelle ou synthétique présentant une structure en feuillets appropriée, permettant un piégeage de cation dans l'espace interfoliaire. Il peut notamment s'agir de smectites, telles que les montmorillonites par exemple, et en particulier les montmorillonites de sodium, de potassium et/ou de calcium, les nontronites, bedelleites, volkonskoïtes, hectorites, saponites, sauconites, sobockites, stevensites, svinfordites et les vermiculites.

Le terme "argile" couvre aussi, plus généralement, un mélange de différentes argiles.

L'invention concerne également l'utilisation de la fraction solide du mélange obtenu selon l'un quelconque des procédés de traitement d'un digestat décrits ci-dessus dans la composition d'un engrais.

L'invention concerne encore une unité de traitement d'un digestat extrait d'un digesteur d'une installation de méthanisation, comprenant :
- des moyens de mélange d'au moins la fraction liquide dudit digestat avec une matière d'origine essentiellement minérale comprenant une quantité substantielle d'argile, de zéolithe et/ou de terre de diatomées, pendant une durée suffisante pour permettre un piégeage au moins partiel par ladite matière de l'azote ammoniacal sous forme ionisée contenu dans ledit digestat;
- des moyens de séparation de la fraction solide dudit mélange.

### 5. Liste des figures

D'autres caractéristiques et avantages de l'invention apparaitront plus clairement à la lecture de la description suivante d'exemples illustratifs et non limitatifs de modes de réalisation de l'invention, et des dessins annexés parmi lesquels :
- la figure 1 est une représentation synoptique, sous forme de schéma-bloc, des étapes d'un exemple de procédé de traitement d'un digestat selon l'invention ;
- la figure 2 illustre de façon schématique une unité de traitement d'un digestat selon l'invention présentant plusieurs cuves de mélange en cascade.

### 6. Description détaillée de l'invention

### 6.1. Premier exemple de mode de réalisation de l'invention

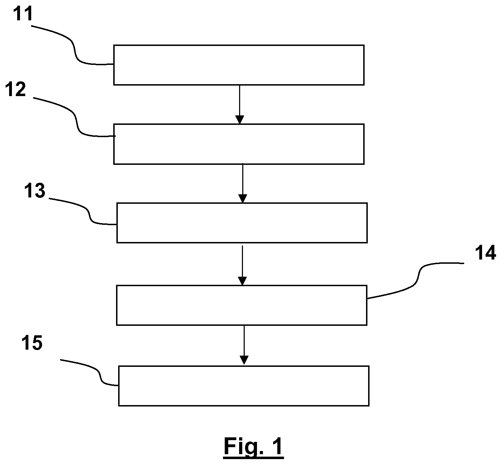

On a représenté en référence à la figure 1 les étapes d'un exemple de procédé de traitement selon l'invention d'un digestat à 27% de matière sèche provenant de la méthanisation d'un lisier, et présentant une concentration totale en azote de 4000 ppm (parties par million).

Dans cet exemple, le procédé de traitement est mis en œuvre au sein d'une unité de traitement des digestats située sur le site de méthanisation, à proximité d'un digesteur.

Dans une première étape 11, la fraction liquide du digestat est séparée de sa fraction solide par filtration.

Une analyse de cette fraction liquide par une méthode chimique de caractérisation connue en soi révèle une concentration totale en azote de 1900 ppm.

1000 litres de cette fraction liquide sont déversés dans une cuve de mélange contenant 300 kg de zéolithe de type clinoptilolite et mélangés avec la zéolithe sous cisaillement mécanique pendant 7h à température ambiante (étape 12).

La fraction solide du mélange obtenu suite à l'étape 12, est ensuite séparée de la fraction liquide du mélange dans une étape 13.

Une analyse de la fraction liquide du mélange par une méthode chimique connue en soi montre que la concentration massique totale en azote dans la fraction liquide du mélange est inférieure de 76% à celle de la fraction liquide du digestat et que celle en ions potassium a chuté de 70%, ou en d'autres termes que le taux de rétention en azote total et en ions potassium par piégeage au sein de la zéolithe est respectivement de 76% et de 70%.

De façon avantageuse, la fraction liquide du mélange est réutilisée pour diluer les déchets entrant sur le site de méthanisation. Il peut également être prévu d'épandre la fraction liquide du mélange du fait de sa faible concentration en azote sur certaines terres agricoles, dans une limite d'environ 100 tonnes à l'hectare.

Dans une étape 14, 270kg de fraction solide du digestat sont mélangés sous agitation mécanique avec la fraction solide du mélange obtenue après séparation, de façon à former une base d'engrais NP dont les composés azotés sont stables.

Dans une variante de ce mode de réalisation de l'invention, il peut être envisagé de réduire la quantité de zéolithe mélangée avec la fraction liquide du digestat, dans la limite de 100g de zéolithe par litre de fraction liquide du digestat, de façon à adapter le rapport entre les apports en azote et en potassium de la base d'engrais.

Des valeurs du taux de rétention obtenues dans des conditions de mélange identiques pour différents mélanges de zéolithe et de la fraction liquide du digestat sont données à titre d'exemples dans le tableau suivant :

| Rapport massique zéolithe/fraction liquide du digestat (g/l) | Taux de rétention en azote (% massique) | Taux de rétention en potassium (% massique) |
|---|---|---|
| 100 | 21 | 20 |
| 150 | 42 | 36 |
| 200 | 47 | 40 |
| 250 | 69 | 52 |

### 6.2. Deuxième exemple de mode de réalisation de l'invention

On décrit ci-après un procédé alternatif de traitement d'un digestat selon l'invention.

Dans cet exemple de mode de réalisation de l'invention, on mélange directement dans une première étape 1 tonne de digestat obtenu à partir de la méthanisation d'un lisier avec 200 kg de zéolithe de type chabazite pendant 7h sous une température de 40°C, après avoir ajouté du sulfate de fer pour ajuster la valeur du pH du mélange à 6.

On sépare ensuite dans une seconde étape la fraction solide et la fraction liquide du mélange obtenu.

Une analyse chimique de la fraction liquide du mélange montre que les taux de rétention par la zéolithe en azote global et en potassium sont respectivement de l'ordre de 82 et 74%.

### 6.3. Traitement des digestats par mélange avec des argiles

On donne ci-après les résultats d'un traitement de la fraction liquide d'un digestat par mélange avec trois argiles différentes pendant 7h à température ambiante.

Dans ces trois exemples :
- le digestat obtenu à partir de la méthanisation d'un lisier est identique ;
- la fraction liquide du digestat présente une concentration en azote total de 1900 ppm avant mélange ; et
- 150g d'argile sont mélangés avec 1 litre de la fraction liquide du digestat, en proportion.

La fraction liquide est mélangée dans chacun de ces exemples respectivement avec une argile de type montmorillonite, une argile exfoliée ou intercalée avec des extraits d'algues agissant comme composants intercalant, distribuée sous le nom commercial "Amadéite"(marque déposée), et une argile intercalée ou exfoliée obtenue par mélange avec des macroalgues pendant 4 heures.

Une analyse de la fraction liquide du mélange obtenu par une méthode d'électrolyse connue en soi révèle que le taux de rétention en ion ammonium est respectivement pour ces trois exemples de 68, 89 et 79%.

### 6.4. Autres déclinaisons et avantages de l'invention

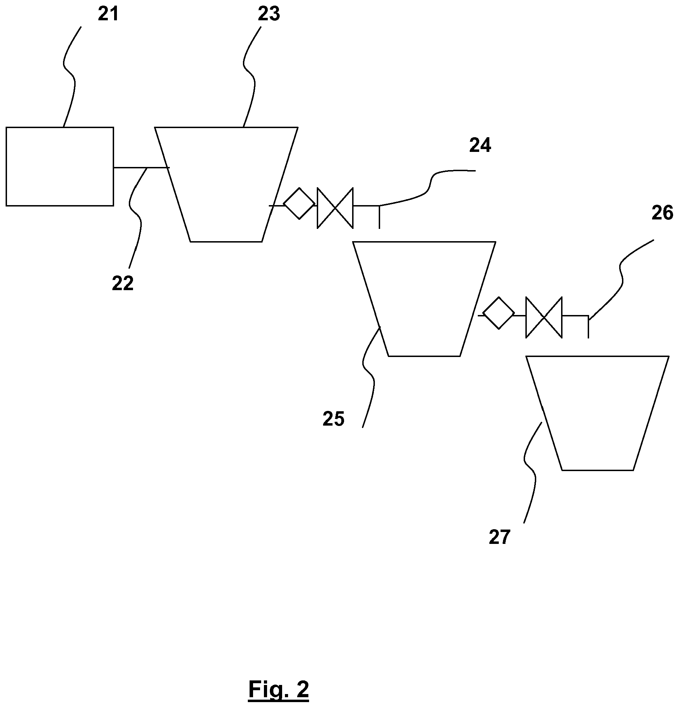

Sur la figure 2, on a illustré un autre exemple de mode de réalisation de l'invention dans lequel la fraction liquide du digestat est mélangée successivement dans 3 cuves montées en cascade, contenant de la terre de diatomées ou de l'argile exfoliée ou intercalées par des extraits d'algues.

Comme on peut le voir sur la figure 2, la fraction liquide du digestat 22 obtenue après séparation dans une unité de filtration 21 est déversée dans une première cuve 23 et mélangée pendant 1 heure avec la terre de diatomées contenue dans la cuve, partiellement saturée en ions ammonium et potassium lors d'un précédent mélange avec du digestat.

La fraction liquide 24 de ce premier mélange après mélange est soutirée au travers d'un filtre et introduite dans une deuxième cuve 25 dans laquelle elle est mélangée avec de la terre de diatomées naturelle pendant 1 heure.

Au terme de ce deuxième mélange, la fraction liquide 26 du deuxième mélange est à son tour soutirée pour se déverser dans une troisième cuve 27 contenant de l'Amadéite et mélangée avec cette dernière pendant 1 heure, afin de parfaire le traitement de la fraction liquide du digestat.

On observe grâce à ce procédé une baisse de la teneur en ion ammonium et en ions potassium supérieure à 95%.

Par ailleurs, ce mode de réalisation particulier de l'invention présente l'avantage de pouvoir obtenir dans chacune des cuves de la terre de diatomée ou de l'Amadéite présentant un taux de rétention en azote sensiblement identique, du fait d'avoir mélangé successivement une fraction liquide de plus en plus pauvre en ammonium avec de la matière sensiblement minérale présentant une capacité de rétention en ion ammonium croissante.

Dans des variantes des modes de réalisation de l'invention décrits ci-dessus, il peut être envisagé de traiter un digestat issu de la méthanisation de lisiers, de déchets organiques d'une industrie agroalimentaire, de boues de station d'épuration ou de déchets ménagers, ou de leur mélange.

Il peut également être prévu, sans sortir du cadre de l'invention, de traiter un digestat par mélange de ce digestat ou de sa fraction liquide avec un mélange de zéolithe, d'argile et/ou de terre de diatomées.

## Revendications

1. Procédé de traitement d'un digestat extrait d'un digesteur d'une installation de méthanisation, **caractérisé en ce qu'**il comprend :
- une étape de mélange d'au moins la fraction liquide dudit digestat avec une matière d'origine essentiellement minérale comprenant une quantité substantielle d'argile, de zéolithe et/ou de terre de diatomées dans des proportions égales à 100 à 300 g de ladite matière d'origine essentiellement minérale par litre de ladite fraction liquide dudit digestat, pendant une durée d'au moins 1 heure, suffisante pour permettre un piégeage au moins partiel par ladite matière de l'azote ammoniacal sous forme ionisée contenu dans ledit digestat ;
- une étape de séparation de la fraction solide et de la fraction liquide dudit mélange ;
- une étape de mélange de la fraction liquide dudit mélange obtenue après séparation avec une deuxième matière d'origine essentiellement minérale comprenant une quantité substantielle d'argile, de zéolithe et/ou de terre de diatomées, apte à piéger au moins une portion d'une espèce azotée résiduelle présente dans ladite fraction liquide dudit mélange après séparation

2. Procédé de traitement d'un digestat selon la revendication 1, **caractérisé en ce qu'**il comprend une étape de séparation de la fraction liquide dudit digestat, préalable à ladite étape de mélange.

3. Procédé de traitement d'un digestat selon la revendication 2, **caractérisé en ce qu'**il comprend en outre une étape supplémentaire de mélange de ladite fraction solide du digestat avec ladite fraction solide dudit mélange.

4. Procédé de traitement d'un digestat selon la revendication 1, **caractérisé en ce que** lors de ladite étape de mélange, ledit digestat est mélangé avec ladite matière d'origine essentiellement minérale.

5. Procédé de traitement d'un digestat selon la revendication 4, **caractérisé en ce que** lors de ladite étape de mélange, on mélange de 80 à 270 g de ladite matière avec 1 kilogramme dudit digestat, en proportions.

6. Procédé de traitement d'un digestat selon l'une quelconque des revendications 1 à 5, **caractérisé en ce que** la durée de ladite étape de mélange est supérieure ou égale à 7 heures.

7. Procédé de traitement d'un digestat selon l'une quelconque des revendications 1 à 6, **caractérisé en ce qu'**il comprend une étape d'ajustement du pH dudit mélange d'au moins ladite fraction liquide dudit digestat avec ladite matière d'origine essentiellement minérale entre 4,5 et 7, comprenant une étape d'ajout audit mélange d'un agent acidifiant ou d'un agent basique.

8. Procédé de traitement selon la revendication 1, **caractérisé en ce qu'**il comprend une pluralité d'étapes de mélange successives consistant à mélanger la fraction liquide obtenue après séparation du mélange précédent avec de la matière d'origine essentiellement minérale apte à piéger au moins une portion d'une espèce azotée résiduelle présente dans la fraction liquide du mélange précédent et comprenant une quantité substantielle d'argile, de zéolithe et/ou de terre de diatomées.

9. Procédé de traitement selon l'une quelconque des revendications 1 à 8, **caractérisé en ce que** ladite matière comprend de la zéolithe naturelle, de préférence de la clinoptilolithe et/ou de la chabazite.

10. Procédé de traitement selon l'une quelconque des revendications 1 à 9, **caractérisé en ce que** ladite matière d'origine essentiellement minérale comprend de l'argile exfoliée et/ou intercalée avec un extrait d'algues et/ou des macroalgues.

11. Utilisation de la fraction solide du mélange obtenu selon le procédé de traitement selon l'une quelconque des revendications 1 à 10 dans la composition d'un engrais.

## Patentansprüche

1. Behandlungsverfahren eines aus einem Faulbehälter einer Methanisierungsanlage extrahierten Gärrests, **dadurch gekennzeichnet, dass** es umfasst:
- einen Schritt des Mischens mindestens der flüssigen Fraktion des Gärrests mit einem Stoff, der im wesentlichen mineralischen Ursprungs ist, umfassend eine substantielle Menge Ton, Zeolith und/oder Kieselgur in Anteilen von gleich 100 bis 300 g des Stoffs, der im Wesentlichen mineralischen Ursprungs ist, je Liter der flüssigen Fraktion des Gärrests während einer Dauer von mindestens 1 Stunde, was ausreicht, um ein mindestens teilweises Einfangen, durch den Stoff, von in dem Gärrest enthaltenen Ammoniakstickstoff in ionisierter Form zu erlauben;
- einen Schritt des Trennens der festen Fraktion und der flüssigen Fraktion des Gemischs;
- einen Schritt des Mischens der nach Trennung erhaltenen flüssigen Fraktion des Gemischs mit einem zweiten Stoff, der im Wesentlichen mineralischen Ursprungs ist, umfassend eine substantielle Menge Ton, Zeolith und/oder Kieselgur, der imstande ist, mindestens eine Portion einer stickstoffhaltigen Restspezies einzufangen, die in der flüssigen Fraktion des Gemischs nach dem Trennen vorhanden ist.

2. Gärrest-Behandlungsverfahren nach Anspruch 1, **dadurch gekennzeichnet, dass** es einen Schritt des Trennens der flüssigen Fraktion des Gärrests vor dem Mischschritt umfasst.

3. Gärrest-Behandlungsverfahren nach Anspruch 2, **dadurch gekennzeichnet, dass** es ferner einen zusätzlichen Schritt des Mischens der festen Fraktion des Gärrests mit der festen Fraktion des Gemischs umfasst.

4. Gärrest-Behandlungsverfahren nach Anspruch 1, **dadurch gekennzeichnet, dass** beim Mischschritt der Gärrest mit dem Stoff gemischt wird, der im Wesentlichen mineralischen Ursprungs ist.

5. Gärrest-Behandlungsverfahren nach Anspruch 4, **dadurch gekennzeichnet, dass** beim Mischschritt 80 bis 270 g des Stoffs mit 1 Kilogramm des Gärrests in Anteilen gemischt werden.

6. Gärrest-Behandlungsverfahren nach einem der Ansprüche 1 bis 5, **dadurch gekennzeichnet, dass** die Dauer des Mischschritts über oder gleich 7 Stunden beträgt.

7. Gärrest-Behandlungsverfahren nach einem der Ansprüche 1 bis 6, **dadurch gekennzeichnet, dass** es einen Schritt des Einstellens des pH des Gemischs von mindestens der flüssigen Fraktion des Gärrests mit dem Stoff, der im Wesentlichen mineralischen Ursprungs ist, zwischen 4,5 und 7 umfasst, umfassend einen Schritt des Hinzufügens eines Säuerungsmittels oder eines basischen Mittels zu dem Gemisch.

8. Behandlungsverfahren nach Anspruch 1, **dadurch gekennzeichnet, dass** es eine Vielzahl aufeinanderfolgender Mischschritte umfasst, die darin bestehen, die nach Trennung des vorangegangenen Gemischs erhaltene flüssige Fraktion mit dem Stoff, der im Wesentlichen mineralischen Ursprungs ist, der imstande ist, mindestens eine Portion einer stickstoffhaltigen Restspezies einzufangen, die in der flüssigen Fraktion des vorangegangenen Gemischs nach dem Trennen vorhanden ist und eine substantielle Menge Ton, Zeolith und/oder Kieselgur umfasst, zu mischen.

9. Behandlungsverfahren nach einem der Ansprüche 1 bis 8, **dadurch gekennzeichnet, dass** der Stoff natürlichen Zeolith, vorzugsweise Clinoptilolith und/oder Chabazit, umfasst.

10. Behandlungsverfahren nach einem der Ansprüche 1 bis 9, **dadurch gekennzeichnet, dass** der Stoff, der im Wesentlichen mineralischen Ursprungs ist, exfolierten und/oder mit einem Algenextrakt und/oder Makroalgen eingelagerten Ton umfasst.

11. Verwendung der festen Fraktion des gemäß dem Behandlungsverfahren nach einem der Ansprüche 1 bis 10 erhaltenen Gemischs in der Zusammensetzung eines Düngers.

## Claims

1. A method for treating a digestate extracted from a digester of a methanisation installation, **characterised in that** it comprises:
- a step of mixing at least the liquid fraction of said digestate with a material of essentially mineral origin comprising a substantial quantity of clay, zeolite and/or diatomaceous earth in proportions equal to 100 to 300 g of said material of essentially mineral origin per litre of said liquid fraction of said digestate, for a period of at least 1 hour, sufficient to allow at least partial trapping by said material of the ammoniacal nitrogen in ionised form contained in said digestate;
- a step of separation of the solid and liquid fractions of said mixture;
- a step of mixing the liquid fraction of said mixture obtained after separation with a second material of essentially mineral origin comprising a substantial quantity of clay, zeolite and/or diatomaceous earth, capable of trapping at least a portion of a residual nitrogenous species present in said liquid fraction of said mixture after separation.

2. The method for treating a digestate according to claim 1, **characterised in that** it comprises a step of separating the liquid fraction of said digestate, prior to said mixing step.

3. The method for treating a digestate according to claim 2, **characterised in that** it further comprises an additional step of mixing said solid fraction of the digestate with said solid fraction of said mixture.

4. The method for treating a digestate according to claim 1,
**characterised in that** in said mixing step said digestate is mixed with said material of essentially mineral origin.

5. The method of treating a digestate according to claim 4,
**characterised in that** in said mixing step, 80 to 270 g of said material is mixed with 1 kg of said digestate, in proportions.

6. The method for treating a digestate according to any one of claims 1 to 5, **characterised in that** the duration of said mixing step is greater than or equal to 7 hours.

7. The method for treating a digestate according to any one of claims 1 to 6,
**characterised in that** it comprises a step of adjusting the pH of said mixture of at least said liquid fraction of said digestate with said material of essentially mineral origin between 4.5 and 7, comprising a step of adding to said mixture an acidifying agent or a basic agent.

8. The method of treatment according to claim 1, **characterised in that** it comprises a plurality of successive mixing steps consisting in mixing the liquid fraction obtained after separation from the preceding mixture with material of essentially mineral origin capable of trapping at least a portion of a residual nitrogenous species present in the liquid fraction of the preceding mixture and comprising a substantial quantity of clay, zeolite and/or diatomaceous earth.

9. The method of treatment according to any of claims 1 to 8, **characterised in that** said material comprises natural zeolite, preferably clinoptilolite and/or chabazite.

10. The method of treatment according to any one of claims 1 to 9, **characterised in that** said material of essentially mineral origin comprises clay exfoliated and/or intercalated with an extract of algae and/or macroalgae.

11. The use of the solid fraction of the mixture obtained according to the method of treatment according to any one of claims 1 to 10 in the composition of a fertilizer.
